# FASCICULE DE BREVET EUROPEEN

(11) **EP 2 839 408 B1**
(45) Date de publication et mention de la délivrance du brevet: **27.12.2017**
(21) Numéro de dépôt: 13714292.3
(22) Date de dépôt: 04.04.2013
(51) Int. Cl.: G06F 21/64, G06F 12/1036, G06F 12/14, G06F 21/74, G06F 21/79

(54) **PROCEDE DE GESTION SECURISEE D'UN ESPACE MEMOIRE POUR MICROCONTROLEUR**
VERFAHREN ZUR SICHEREN VERWALTUNG EINES SPEICHERPLATZES FÜR EINE MIKROSTEUERUNG
METHOD OF SECURE MANAGEMENT OF A MEMORY SPACE FOR MICROCONTROLLER

(30) Priorité: 18.04.2012 FR 1253553
(43) Date de publication de la demande: 25.02.2015
(73) Titulaire: Schneider Electric Industries SAS, 92500 Rueil-Malmaison (FR)
(72) Inventeur: CHAPIER, Pascal, F-06560 Valbonne (FR); JARAUDIAS, Patrice, F-06410 Biot (FR)
(74) Mandataire: Dufresne, Thierry
(86) Numéro de dépôt international: PCT/EP2013/057117
(87) Numéro de publication internationale: WO 2013/156315

(56) Documents cités:
- EP-A2- 1 331 539
- US-A1- 2004 177 261
- US-A1- 2007 118 880
- US-A1- 2008 184 365
- TELLER P J: "TRANSLATION-LOOKASIDE BUFFER CONSISTENCY", COMPUTER, IEEE SERVICE CENTER, LOS ALAMITOS, CA, US, vol. 23, no. 6, 1 juin 1990 (1990-06-01), pages 26-36, XP000173737, ISSN: 0018-9162, DOI: 10.1109/2.55498

## Description

### Domaine technique de l'invention

La présente invention se rapporte à un procédé pour gérer des applications présentant un niveau d'intégrité et de sécurité fonctionnelle élevé ainsi que des applications ne présentant pas de criticité particulière, sur un même système de microcontrôleur.

Ainsi, la présente invention concerne la gestion de systèmes critiques du point de vue de la sécurité fonctionnelle des équipements électroniques programmables et du point de vue de l'intégrité, dans le cadre du fonctionnement simultané, sur un même système de microcontrôleur, d'applications critiques, dites «safe», et présentant donc un niveau d'intégrité et de sécurité fonctionnelle garanti élevé, et des applications non critiques, dites «no safe», et présentant un niveau d'intégrité et de sécurité fonctionnelle non garanti.

### Etat de la technique

Les systèmes concernés par la présente invention sont des microcontrôleurs présentant des architectures avec plusieurs processeurs et le procédé selon l'invention adresse leur utilisation dans un environnement sensible à des problématiques de sécurité fonctionnelle et d'intégrité, associés à une problématique générale de certification de systèmes de microcontrôleur du point de vue de la sécurité fonctionnelle et de l'intégrité. De telles certifications sont par exemple nommées SIL pour Safety Integrity Level en anglais, signifiant Niveau d'intégrité et de sécurité. Il existe différentes valeurs de SIL, allant de 1 à 4, du moins sécurisé au plus sécurisé, notamment défini dans les «European Functional Safety standards» signifiant «standards Européens de sécurité fonctionnelle».

Actuellement, pour prendre en compte la problématique ayant trait à la coexistence d'applications sécurisées, dites «safe», c'est-à-dire impliquant un niveau d'intégrité et de sécurité fonctionnelle élevé et d'applications non sécurisées, dites «no safe», c'est-à-dire n'impliquant pas un niveau d'intégrité et de sécurité fonctionnelle élevé, les technologies connues concernent essentiellement les notions de virtualisation et d'hyperviseurs.

L'homme du métier possède dans ses connaissances générales les principales caractéristiques de ces technologies. Brièvement, on rappelle que les technologies de virtualisation consistent en un mécanisme logiciel de sécurité fonctionnelle dans lequel une couche de gestion, occupée par exemple par un hyperviseur, présentant un très haut niveau de fiabilité, comprend des moyens pour séparer des plates-formes logicielles indépendantes évoluant sur un même processeur. Pour ce faire, ledit hyperviseur comporte une unité de gestion de la mémoire, usuellement dénommé MMU pour Memory Management Unit, permettant de cloisonner entre les différentes applications l'utilisation de ressources, notamment d'un espace mémoire, partagées.

Un tel hyperviseur peut présenter la capacité de gérer de façon indépendante les différents processeurs ; par exemple, ledit hyperviseur peut avoir la capacité de redémarrer un processeur associé à un système d'exploitation sans redémarrer les autres processeurs.

A titre d'illustration d'une technologie mettant en oeuvre les techniques de virtualisation mentionnées ci-dessus, on pourra se référer au document EP1067461 A1. Par ailleurs, les documents US2007118880A1 et EP1331539A2 décrivent des systèmes à plusieurs processeurs dans un environnement comportant des problèmes de sécurité. En particulier, le document US2007118880A1 décrit un système avec un 1^{er} processeur dédié à des applications sécurisées, un 2^{nd} processeur dédié à des applications non sécurisées et des moyens d'accès à un espace mémoire partagé.

Cependant, si elle répond à la problématique générale de gestion de la coexistence d'applications sécurisées et non sécurisées sur un même processeur, la mise en oeuvre d'un hyperviseur présente certains inconvénients. D'abord, l'utilisation d'un hyperviseur dégrade les performances d'un système car cet outil consomme des ressources et entraîne a priori un ralentissement du système. Cela peut nuire également à des aspects de contraintes « temps-réel » associées à certaines applications, qu'elles soient sécurisées ou non sécurisées. Par ailleurs, ce type d'équipement présente aujourd'hui un coût d'acquisition très élevé.

Ainsi, le problème technique visé par la présente invention peut être considéré comme la recherche de moyens permettant de gérer la coexistence d'applications sécurisées et non sécurisées sur un même système de microcontrôleur, à des coûts réduits, donc en s'affranchissant des technologies connues mais onéreuses impliquant virtualisation et hyperviseur. De plus l'invention aura un impact limité sur les performances du système.

### Exposé de l'invention

A cet effet, l'invention a pour objet un procédé de gestion d'un système de microcontrôleur électronique, ledit système de microcontrôleur comportant :
- deux processeurs, avec un premier processeur destiné à l'exécution d'une application non sécurisée, présentant un niveau de sécurité fonctionnelle et d'intégrité non garanti, et un deuxième processeur dédié à l'exécution d'une application sécurisée, mettant en oeuvre du code et des données, et impliquant un niveau de sécurité fonctionnelle et d'intégrité garanti, ladite application sécurisée étant apte à mettre en oeuvre une fonction de sécurité ;
- des moyens d'accès à un espace mémoire partagé.

Selon l'invention, le premier processeur comprend une unité de gestion de la mémoire configurée de telle sorte qu'elle met en oeuvre un contrôle d'accès en écriture, pour gérer l'accès en écriture à l'espace mémoire partagé, non modifiable lorsque l'application sécurisée met en oeuvre sa fonction de sécurité.

Avantageusement, le contrôle d'accès en écriture est rendu non modifiable par la mise en oeuvre des étapes suivantes :
- la répartition de l'espace mémoire partagée entre une zone mémoire allouée à l'application sécurisée et une zone mémoire allouée à l'application non sécurisée ;
- la mise en oeuvre d'un buffer pour l'anticipation de la traduction des adresses ;
- le chargement dans ledit buffer pour l'anticipation de la traduction des adresses d'un ensemble de règles d'accès à la mémoire partagée comprenant une règle d'interdiction en écriture par l'application non sécurisée dans une zone réservée de la zone mémoire allouée à l'application sécurisée ;
- la copie dans l'espace mémoire partagée d'une image du buffer pour l'anticipation de la traduction des adresses ;
- le chargement dans ladite image du buffer pour l'anticipation de la traduction des adresses d'une règle d'interdiction en écriture dans le buffer pour l'anticipation de la traduction des images ;
- la mise en oeuvre, par l'unité de gestion de la mémoire, des règles d'accès contenues dans l'image du buffer pour l'anticipation de la traduction des adresses.

L'expression «Buffer pour l'anticipation de la traduction des adresses» ou plus simplement «Buffer de traduction d'adresses» correspond à l'acronyme usuel connu TLB signifiant en anglais «Translation Lookaside Buffer», qui est une mémoire d'un microprocesseur pouvant être utilisée par une unité de gestion mémoire notamment pour traduire des adresses virtuelles en adresses physiques.

Avantageusement, le procédé selon l'invention peut par ailleurs comprendre, à la suite des étapes précédentes, une étape consistant en une vérification de l'intégrité du buffer pour l'anticipation de la traduction des adresses et de l'intégrité du code et des données correspondant à l'application sécurisée.

Avantageusement, le procédé selon l'invention peut par ailleurs comprendre une étape de construction d'un CRC de sécurité, CRC signifiant contrôle de redondance cyclique, visant à détecter des erreurs de transmission ou de transfert, ledit CRC étant associé audit buffer pour l'anticipation de la traduction des adresses.

Avantageusement, le procédé selon l'invention peut par ailleurs comprendre, après chaque étape, une étape de vérification du bon déroulement de l'étape d'action précédente.

### Brève description des figures

D'autres caractéristiques et avantages vont apparaître dans la description détaillée qui suit faite en regard des dessins annexés qui représentent :
- la figure 1 : un schéma fonctionnel d'un système de microcontrôleur électronique devant gérer des applications sécurisées et non sécurisées, dites respectivement «safe» et «no safe»;
- la figure 2 : un exemple de mode de réalisation du procédé selon l'invention, mettant en oeuvre une unité de gestion de la mémoire pour une application non sécurisée, qui garantit l'isolation mémoire vis-à-vis d'une application sécurisée.

### Description détaillée d'au moins un mode de réalisation

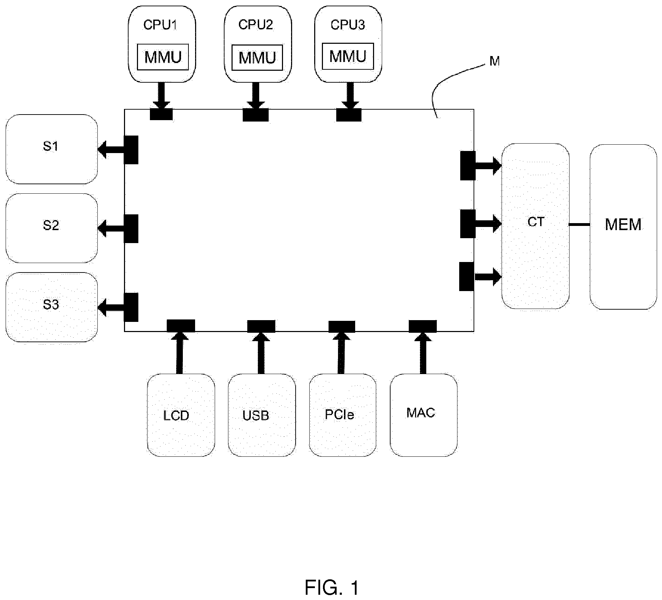

A partir du système de microcontrôleur représenté schématiquement à la figure 1, le procédé selon l'invention concerne la gestion simultanée, dans le système de microcontrôleur, d'applications sécurisées, c'est-à-dire présentant un niveau de sécurité fonctionnelle et d'intégrité qui soit à la fois garanti et élevé, et d'applications non sécurisées, c'est-à-dire présentant un niveau de sécurité non garanti.

La figure 1 représente un système de microcontrôleur électronique trois microprocesseurs CPU1, CPU2, CPU3. Dans ce système, chaque processeur comprend des moyens d'accès à la mémoire partagée au travers des unités de gestion de la mémoire MMU.

Le système de microcontrôleur interagit par ailleurs avec un espace mémoire partagé MEM par l'intermédiaire d'un contrôleur de mémoire CT, et contrôle des fonctions mises en oeuvre par des périphériques esclaves S1, S2, S3, par exemple des interfaces de liaison série, des interfaces de carte mémoire SDCARD ou compactFlash, n'ayant pas de rôle actif, c'est-à-dire ne prenant pas l'initiative d'utiliser le système de microcontrôleur.

Enfin, le système de microcontrôleur est sollicité par des périphériques maîtres utilisateurs reliés à lui par l'intermédiaire d'interfaces dédiées ; ces périphériques maîtres LCD, USB, PCIe, MAC peuvent avoir l'initiative d'utiliser les ressources du microcontrôleur. En particulier, lesdits périphériques maîtres utilisateurs peuvent être des périphériques correspondant à des standards, par exemple des écrans LCD, pour Liquid Crystal Display an anglais, signifiant écran à cristaux liquides, des périphériques USB, pour Universal Serial Bus en anglais, du nom de la norme bien connue relative à un bus informatique en transmission série, des cartes d'extension PCIe, ou PCI Express, pour Peripheral Component Interconnect Express an anglais, du nom du standard connu permettant la connexion de cartes d'extension sur une carte mère, ou encore des cartes Ethernet MAC pour la connexion à un réseau.

La matrice d'interconnexion M réalise l'interconnexion entre lesdits processeurs CPU1, CPU2, CPU3, l'espace mémoire partagé MEM, via le contrôleur de mémoire CT, les périphériques maîtres utilisateurs LCD, USB, PCIe, MAC, via les interfaces dédiées, et les périphériques esclaves S1, S2, S3.

Le procédé selon l'invention confère les moyens de faire fonctionner sur un même système de microcontrôleur, du type de celui présenté à la figure 1, à la fois des applications sécurisées et des applications non sécurisées, en particulier par une utilisation particulière d'unités de gestion de la mémoire MMU liés à chacun des processeurs CPU1, CPU2, CPU3. Cette utilisation particulière des unités de gestion de la mémoire MMU garantit qu'aucune application non sécurisée ne peut attenter à l'intégrité d'une zone de l'espace mémoire partagée MEM utilisée par une application sécurisée en cours d'exécution d'une fonction de sécurité.

Par ailleurs, lorsque, par cette utilisation particulière des unités de gestion de la mémoire MMU, l'intégrité de la zone de l'espace mémoire partagée MEM utilisée par une application sécurisée est garantie, le système pourra être considéré comme fonctionnant, dans sa globalité, en mode sécurisé, dit «safe». Dans le cas contraire, dès lors que l'intégrité de la zone de la mémoire partagée MEM utilisée par l'application sécurisée n'est pas garantie, le système sera considéré comme fonctionnant, dans sa globalité, dans un mode de maintenance, non sécurisé.

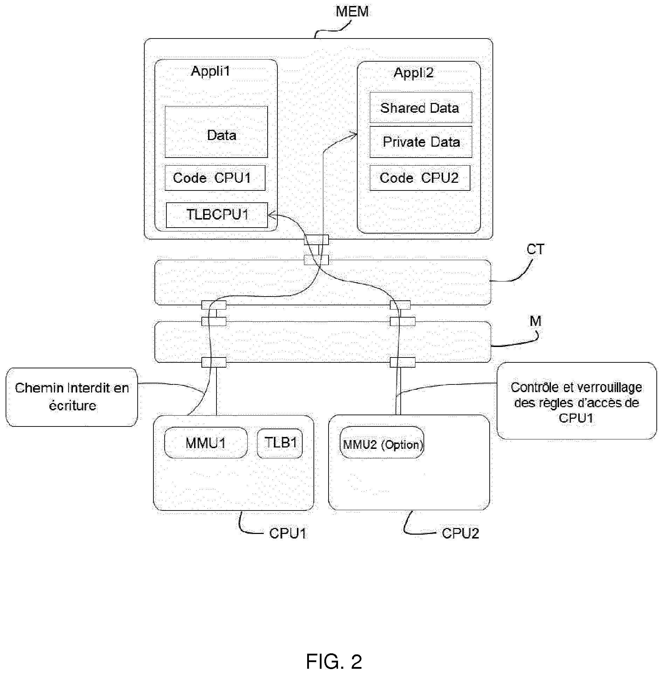

Un exemple d'utilisation de telles unités de gestion de la mémoire MMU est présenté à la figure 2.

Ainsi, la figure 2 fait apparaître une répartition de deux applications, Appli1 et Appli2 dans la mémoire partagée MEM. L'application non sécurisée Appli1 est exécutée par le premier processeur CPU1, elle est développée autour d'un système d'exploitation standard couramment utilisé dans l'industrie, par exemple VxWorks Linux, conférant à l'application Appli1 des caractéristiques d'exécution temps-réel mais n'offrant aucune capacité à recevoir une certification pour la sécurité fonctionnelle des équipements industriels qui la mettent en oeuvre. L'application sécurisée Appli2, exécutée par le second processeur CPU2, est entièrement développée selon un processus de définition, de réalisation et de test conçu pour permettre l'obtention d'une certification de sécurité fonctionnelle.

Le système de microcontrôleur pourrait tout à fait comporter d'autres processeurs, notamment un troisième processeur chargé d'exécuter une troisième application de type non sécurisée, par exemple pour réaliser une fonction de communication, mais cela n'est pas schématisé sur la figure 2. Il pourrait également y voir d'autres processeurs dédiés à l'exécution d'autres applications sécurisées.

Une première unité de gestion de la mémoire MMU1 attachée au premier processeur CPU1 met en oeuvre un pilote exécutant des étapes de procédé spécifiques, de manière à garantir l'isolation de l'espace mémoire partagé entre les applications, les applications non sécurisées ne devant pas pouvoir attenter à l'intégrité des données associées à des applications sécurisées.

Le principe de protection vise à sécuriser la fonction de filtrage de la première unité de gestion de la mémoire MMU1, liée au premier processeur CPU1 qui exécute l'application non sécurisée Appli1, afin de garantir l'interdiction d'écriture dans la zone de la mémoire partagée MEM allouée à l'application sécurisée Appli2. Une unité de gestion de la mémoire MMU2, liée au deuxième processeur CPU2, est optionnelle ; son utilisation n'est pas liée au principe de protection décrit ci-dessus.

Dans une utilisation classique, le pilote de la première unité de gestion de la mémoire MMU1, appartenant à l'application non sécurisée Appli1, met en oeuvre un buffer de traduction d'adresses TLB1 pour la traduction des adresses auxquelles le premier processeur CPU1 cherche à accéder en adresses de la mémoire partagée MEM. Ce buffer de traduction d'adresses TLB1 dicte les règles d'accès du premier processeur CPU1 à la mémoire partagée MEM au travers de la première unité de gestion de la mémoire MMU1. Dans cette utilisation classique, le buffer de traduction d'adresses TLB1 est construit par l'application non sécurisée Appli1 consécutivement à l'exécution du pilote de la première unité de gestion de la mémoire MMU1 ; cette dernière ne peut par conséquent pas garantir le filtrage des accès en écriture dans la zone de la mémoire partagée MEM dédiée à l'application sécurisée Appli2. L'utilisation classique de la première unité de gestion de la mémoire MMU1 ne satisfait pas à l'exécution d'applications sécurisées et «non safe» sur un même système de microcontrôleur tel que défini en figure 1.

Un procédé particulier exploitant la première unité de gestion de la mémoire MMU1 est décrit à travers la présente invention. Cette utilisation particulière consiste à rendre le contenu du buffer de traduction d'adresses TLB1 contrôlé puis verrouillé par l'application sécurisée Appli2 de façon à garantir le filtrage des écritures effectué par la première unité de gestion de la mémoire MMU1. L'application sécurisée Appli2 peut alors assurer une fonction de sécurité dès lors que le contrôle sur le contenu du buffer de traduction d'adresses TLB1 est satisfait. L'équipement intégrant le système de microcontrôleur considéré pourra alors être considéré comme fonctionnant, dans sa globalité, en mode sécurisé, dit «safe».

Le principe de verrouillage du buffer de traduction d'adresses TLB1 repose sur une action de blocage des accès en écriture dans la zone de mémoire partagée MEM qui contient une image TLBCPU1 du buffer de traduction d'adresses TLB1. Le fonctionnement de la première unité de gestion de la mémoire MMU1 est tel qu'elle utilise toujours les règles d'accès contenues dans l'image TLBCPU1 du buffer de traduction d'adresses TLB1.

Une séquence possible pour la construction, le contrôle puis le verrouillage des règles d'accès du premier processeur CPU1 à la mémoire partagée MEM est décrite ci-après. D'autres séquences menant au même résultat sont possibles sans sortir du cadre de l'invention.

L'étape 1 est une étape de définition de l'organisation de la mémoire partagée MEM. La localisation de l'image TLBCPU1 du buffer de traduction d'adresses TLB1 est définie et connue par l'application non sécurisée Appli1 et l'application sécurisée Appli2. Une zone de la mémoire partagée MEM est réservée pour contenir du code exécutable issu de l'application sécurisée Appli2 ; cette zone est référencée «Code CPU2» sur la figure 2. Une zone de la mémoire partagée MEM est réservée pour contenir les données privées de l'application sécurisée Appli2 ; cette zone est référencée «Private Data» sur la figure 2. Les données en partage par l'application sécurisée Appli2 pour un accès en lecture par l'application non sécurisée Appli1 ont une localisation connue des deux applications non sécurisée Appli1 et sécurisée Appli2 ; ces données en partage sont référencées «Shared Data» sur la figure 2.

Une zone de la mémoire partagée MEM est par ailleurs allouée à l'application non sécurisée Appli1, comprenant une zone «Code CPU1» pour le code exécutable et une zone «Data» pour les données associées.

L'étape 2 correspond au démarrage de l'équipement, ou à l'initialisation de l'équipement, comprenant le système de microcontrôleur chargé de mettre en oeuvre les applications non sécurisée Appli1 et sécurisée Appli2. L'application non sécurisée Appli1, par l'intermédiaire de l'exécution du pilote d'initialisation de la première unité de gestion de la mémoire MMU1, construit le buffer de traduction d'adresses TLB1. A ce stade l'application sécurisée Appli2 n'assure pas encore de fonction de sécurité, dans l'attente que l'application non sécurisée Appli1 finisse de construire le buffer de traduction d'adresses TLB1. Il peut être prévu, au cours de l'étape 2, la construction d'un CRC de sécurité, CRC signifiant contrôle de redondance cyclique, contrôlé par l'application non sécurisée Appli1, pour détecter la fin de la construction et de l'initialisation du buffer de traduction d'adresses TLB1 et passer à l'étape 3.

L'étape 3 correspond au verrouillage du buffer de traduction d'adresses TLB1. Un moyen préféré de mise en oeuvre de cette étape 3 est d'activer une fonction de la première unité de gestion de la mémoire MMU1 consistant à configurer l'interdiction en écriture pour les adresses en mémoire partagée MEM correspondant à l'image TLBCPU1 du buffer de traduction d'adresses TLB1.

L'étape 4 correspond à la validation du contenu du buffer de traduction d'adresses TLB1. Cette étape 4 est dédiée à l'application sécurisée Appli2. Ainsi, l'application sécurisée Appli2 vérifie que les règles contenues dans l'image TLBCPU1 du buffer de traduction d'adresses TLB1 correspondent aux définitions visées à l'étape 1.

L'étape 5 correspond au fonctionnement en mode «safe» du système de microcontrôleur et de l'équipement auquel il est intégré. L'application sécurisée Appli2 remplit alors sa fonction de sécurité, et l'application non sécurisée Appli1 ne peut pas attenter à l'intégrité du code et des données de l'application sécurisée Appli2. L'application sécurisée Appli2 doit par ailleurs de préférence effectuer périodiquement la vérification de l'intégrité du code et des données qui lui sont associés.

En résumé, le procédé selon l'invention comprend les moyens pour assurer la gestion sécurisée d'applications sécurisées et non sécurisées sur un même système de microcontrôleur, en particulier par l'intermédiaire de la mise en oeuvre particulière d'une unité de gestion de la mémoire sécurisée, située au niveau du système d'exploitation du processeur exécutant lesdites applications non sécurisées.

Avantageusement, en vue de l'obtention d'une certification de sécurité fonctionnelle d'un équipement industriel intégrant un tel système de microcontrôleur, la certification de la première unité de gestion de la mémoire MMU1, mettant en oeuvre le procédé selon l'invention, peut s'avérer être une condition à remplir suffisante pour le critère de l'isolation mémoire entre applications sécurisées et non sécurisées.

## Revendications

1. Procédé de gestion d'un système de microcontrôleur électronique, ledit système de microcontrôleur comportant :
- deux processeurs (CPU1, CPU2), avec un premier processeur (CPU1) destiné à l'exécution d'une application non sécurisée (Appli1), présentant un niveau de sécurité fonctionnelle et d'intégrité non garanti, et un deuxième processeur (CPU2) dédié à l'exécution d'une application sécurisée (Appli2), mettant en oeuvre du code et des données, et impliquant un niveau de sécurité fonctionnelle et d'intégrité garanti, ladite application sécurisée (Appli2) étant apte à mettre en oeuvre une fonction de sécurité ;
- des moyens d'accès (CT) à un espace mémoire partagé (MEM) ;
- ledit premier processeur (CPU1) comprenant une unité de gestion de la mémoire (MMU1) apte à mettre en oeuvre un contrôle d'accès en écriture, pour gérer l'accès en écriture à l'espace mémoire partagé (MEM), destiné à être non modifiable lorsque l'application sécurisée (Appli2) met en oeuvre sa fonction de sécurité,
ledit procédé de gestion permettant d'assurer ledit contrôle d'accès en écriture rendu non modifiable par la mise en oeuvre des étapes suivantes :
- la répartition de l'espace mémoire partagée (MEM) entre une zone mémoire allouée à l'application sécurisée et une zone mémoire allouée à l'application non sécurisée ;
- la mise en oeuvre d'un buffer pour l'anticipation de la traduction des adresses (TLB1) ;
- le chargement dans ledit buffer pour l'anticipation de la traduction des adresses (TLB1) d'un ensemble de règles d'accès à l'espace mémoire partagé (MEM) comprenant une règle d'interdiction en écriture par l'application non sécurisée dans une zone réservée de la zone mémoire allouée à l'application sécurisée, l'exécution de ladite règle d'interdiction en écriture étant contrôlée par ladite application sécurisée (Appli2) ;
- la copie dans l'espace mémoire partagée d'une image (TLBCPU1) du buffer pour l'anticipation de la traduction des adresses ;
- le chargement dans ladite image (TLBCPU1) du buffer pour l'anticipation de la traduction des adresses d'une règle d'interdiction en écriture dans le buffer pour l'anticipation de la traduction des images ;
- la mise en oeuvre, par l'unité de gestion de la mémoire (MMU1), des règles d'accès contenues dans l'image (TLBCPU1) du buffer pour l'anticipation de la traduction des adresses.

2. Procédé selon la revendication 1, comprenant par ailleurs, à la suite des étapes précédentes, une étape consistant en une vérification de l'intégrité du buffer pour l'anticipation de la traduction des adresses et de l'intégrité du code et des données correspondant à l'application sécurisée (Appli2).

3. Procédé selon l'une des revendications 1 à 2, comprenant par ailleurs une étape de construction d'un CRC de sécurité, CRC signifiant contrôle de redondance cyclique, visant à détecter des erreurs de transmission ou de transfert, ledit CRC étant associé audit buffer pour l'anticipation de la traduction des adresses.

4. Procédé selon l'une des revendications 1 à 3, comprenant par ailleurs, après chaque étape, une étape de vérification du bon déroulement de l'étape d'action précédente.

## Patentansprüche

1. Verfahren zur Verwaltung eines elektronischen Mikrokontrollersystems, wobei das Mikrokontrollersystem aufweist:
- zwei Prozessoren (CPU1, CPU2) mit einem zur Ausführung einer ungesicherten Anwendung (Appli1) bestimmten ersten Prozessor (CPU1), der eine nicht garantierte Stufe funktionaler Sicherheit und Integrität aufweist, und einem für die Ausführung einer gesicherten Anwendung (Appli2) dedizierten zweiten Prozessor (CPU2), der Code und Daten verwendet und eine garantierte Stufe funktionaler Sicherheit und Integrität impliziert, wobei die gesicherte Anwendung (Appli2) eine Sicherheitsfunktion anwenden kann;
- Zugriffseinrichtungen (CT) auf einen gemeinsam genutzten Speicherplatz (MEM) ;
- wobei der erste Prozessor (CPU1) eine Verwaltungseinheit des Speichers (MMU1) enthält, die eine Schreibzugriffskontrolle anwenden kann, um den Schreibzugriff auf den gemeinsam genutzten Speicherplatz (MEM) zu verwalten, der dazu bestimmt ist, unveränderbar zu sein, wenn die gesicherte Anwendung (Appli2) ihre Sicherheitsfunktion anwendet,
wobei das Verwaltungsverfahren es ermöglicht, durch die Durchführung der folgenden Schritte die unveränderbar gemachte Schreibzugriffskontrolle zu gewährleisten:
- die Verteilung des gemeinsam genutzten Speicherplatzes (MEM) zwischen einer der gesicherten Anwendung zugewiesenen Speicherzone und einer der ungesicherten Anwendung zugewiesenen Speicherzone;
- die Anwendung eines Puffers zur Antizipation der Umsetzung der Adressen (TLB1) ;
- das Laden in den Puffer zur Antizipation der Umsetzung der Adressen (TLB1) einer Einheit von Zugriffsregeln zum gemeinsam genutzten Speicherplatz (MEM), die eine Regel des Schreibverbots durch die ungesicherte Anwendung in einer reservierten Zone der der gesicherten Anwendung zugeordneten Speicherzone enthält, wobei die Ausführung der Schreibverbotregel von der gesicherten Anwendung (Appli2) kontrolliert wird;
- die Kopie in den gemeinsam genutzten Speicherplatz eines Bilds (TLBCPU1) des Puffers zur Antizipation der Umsetzung der Adressen;
- das Laden in das Bild (TLBCPU1) des Puffers zur Antizipation der Umsetzung der Adressen einer Schreibverbotregel im Puffer zur Antizipation der Umsetzung der Bilder;
- die Anwendung durch die Verwaltungseinheit des Speichers (MMU1) der im Bild (TLBCPU1) des Puffers zur Antizipation der Umsetzung der Adressen enthaltenen Zugriffsregeln.

2. Verfahren nach Anspruch 1, das außerdem nach den vorhergehenden Schritten einen Schritt enthält, der aus einer Überprüfung der Integrität des Puffers zur Antizipation der Umsetzung der Adressen und der Integrität des Codes und der Daten entsprechend der gesicherten Anwendung (Appli2) besteht.

3. Verfahren nach einem der Ansprüche 1 bis 2, das außerdem einen Schritt der Konstruktion einer Sicherheits-CRC enthält, wobei CRC zyklische Redundanzkontrolle bedeutet, der darauf abzielt, Übertragungs- oder Transferfehler zu erfassen, wobei die CRC dem Puffer zur Antizipation der Umsetzung der Adressen zugeordnet ist.

4. Verfahren nach einem der Ansprüche 1 bis 3, das außerdem nach jedem Schritt einen Schritt der Überprüfung des korrekten Ablaufs des vorhergehenden Aktionsschritts enthält.

## Claims

1. A method of management of an electronic microcontroller system, said microcontroller system comprising:
- two processors (CPU1, CPU2), with a first processor (CPU1) intended for the execution of a non-secure application (Appli1), exhibiting a non-guaranteed level of functional security and integrity, and a second processor (CPU2) dedicated to the execution of a secure application (Appli2), implementing code and data, and involving a guaranteed level of functional security and integrity, said secure application (Appli2) being able to implement a security function;
- means of access (CT) to a shared memory space (MEM);
- said first processor (CPU1) comprising a memory management unit (MMU1) able to implement a check of write-access, to manage write-access to the shared memory space (MEM), intended to be non-modifiable when the secure application (Appli2) implements its security function,
said management method making it possible to ensure said check of write-access rendered non-modifiable by the implementation of the following steps:
- the apportionment of the shared memory space (MEM) between a memory area allocated to the secure application and a memory area allocated to the non-secure application;
- the implementation of a buffer for the anticipation of the translation of the addresses (TLB1);
- the loading into said buffer for the anticipation of the translation of the addresses (TLB1) of a set of rules of access to the shared memory space (MEM) comprising a rule prohibiting writing by the non-secure application in a reserved area of the memory area allocated to the secure application, the execution of said rule prohibiting writing being checked by the secure application (Appli2);
- the copying into the shared memory space of an image (TLBCPU1) of the buffer for the anticipation of the translation of the addresses;
- the loading into said image (TLBCPU1) of the buffer for the anticipation of the translation of the addresses of a rule prohibiting writing in the buffer for the anticipation of the translation of the images;
- the implementation, by the memory management unit (MMU1), of the access rules contained in the image (TLBCPU1) of the buffer for the anticipation of the translation of the addresses.

2. The method as claimed in claim 1, comprising moreover, subsequent to the previous steps, a step consisting of a verification of the integrity of the buffer for the anticipation of the translation of the addresses and of the integrity of the code and of the data corresponding to the secure application (Appli2).

3. The method as claimed in one of claims 1 to 2, moreover comprising a step of constructing a security CRC, CRC standing for cyclic redundancy check, aimed at detecting errors of transmission or of transfer, said CRC being associated with said buffer for the anticipation of the translation of the addresses.

4. The method as claimed in one of claims 1 to 3, comprising moreover, after each step, a step of verifying the proper progress of the previous action step.
